Europäisches Patentamt

European Patent Office

Office européen des brevets

(11) Veröffentlichungsnummer: **0 093 322 B1**

# EUROPÄISCHE PATENTSCHRIFT

(45) Veröffentlichungstag der Patentschrift: **17.07.91**

(21) Anmeldenummer: **83103842.7**

(22) Anmeldetag: **20.04.83**

(51) Int. Cl.⁵: **B60M 1/02, B60M 7/00**

(54) **Auf die fortgeschrittene Abnutzung der Schleifkohle von Bestandteil von Schleifleitungen bildenden Stromabnehmern ansprechender Impulsauslöser.**

(30) Priorität: **23.04.82 DE 3215251**

(43) Veröffentlichungstag der Anmeldung:
**09.11.83 Patentblatt 83/45**

(45) Bekanntmachung des Hinweises auf die Patenterteilung:
**17.07.91 Patentblatt 91/29**

(84) Benannte Vertragsstaaten:
**AT BE CH FR GB IT LI LU NL SE**

(56) Entgegenhaltungen:
**DE-A- 2 835 103**
**US-A- 2 700 760**
**US-A- 3 867 593**

(73) Patentinhaber: **Paul Vahle GmbH & Co. KG**
**Westicker Strasse 52**
**W-4618 Kamen(DE)**

(72) Erfinder: **Hillmann, Willi**
**Ostkamp 8**
**W-4618 Kamen(DE)**

(74) Vertreter: **Henfling, Fritz, Dipl.-Ing.**
**Beurhausstrasse 7**
**W-4600 Dortmund 1(DE)**

Rank Xerox (UK) Business Services

## Beschreibung

Die Erfindung betrifft einen auf die fortgeschrittene Abnutzung der Schleifkohle von Bestandteil von mehradrigen Schleifleitungen bildenden Stromabnehmern ansprechender Impulsauslöser.

Ein bekannter Impulsauslöser (US-A-2,700,760) weist ein Paar einarmige, auf einer an der Rückseite der Schleifleitung sich quer zur Schleifleitung erstreckenden Achse jeweils eine Ader der Schleifleitung einfassend angeordnete Hebel auf, wobei die Unterkante der sich in Laufrichtung des Stromabnehmers erstreckenden Hebel unter der Einwirkung einer Rückstellfeder auf die Hebel in ein Niveau überführt ist, das unterhalb des Niveaus liegt, in das sich der Stromabnehmer-Korpus bei abgenutzter Schleifkohle erstreckt, der bei fortgeschrittener Abnutzung der Schleifkohle und dementsprechender Verlagerung des Stromabnehmers in Richtung auf die Ader mit seinen Korpus auf die Hebel auflaufend diese unter impulsauslösender Kontaktgabe in Richtung auf die Ader verschwenkt. Mit einem solchen, vergleichsweise groß bauenden Impulsauslöser lassen sich mehradrige Schleifleitungen jedenfalls dann nicht absichern, wenn die Adern in einem vergleichsweise geringen Abstand zueinander verlaufen. Bei Verwendung des bekannten Impulsauslösers für die Überwachung mehradriger Schleifleitungen erweist es sich des weiteren als nachteilig, daß es für die Weiterleitung der ausgelösten Impulse einer der Anzahl der Impulsauslöser entsprechenden Anzahl von Signalleitungen bedarf. Der bekannte Impulsauslöser stellt dann auch eine konstruktiv sehr aufwendige Lösung dar.

Ausgehend vom im vorausgehenden umrissenen Stand der Technik liegt der Erfindung die Aufgabe zugrunde, das Problem der Anzeige der fortgeschrittenen Abnutzung der Schleifkohle von Bestandteil von Schleifleitungen bildenden Stromabnehmern über einen Impulsauslöser in einer konstruktiv einfacheren Weise zu lösen, die es dann auch ermöglicht, den Impulsauslöser mehradrigen Schleifleitungen zuzuordnen, deren Adern in einem vergleichsweise geringen Abstand zueinander verlaufen.

Die Aufgabe wird mit einem auf die fortgeschrittene Abnutzung der Schleifkohle von entlang einer mehradrigen SchleifLeitung verfahrbaren Stromabnehmern ansprechenden Impulsauslöser gelöst, der die im Patentanspruch 1 angegebenen Merkmale aufweist.

Wird der an der Schleifleitung installierte Impulsauslöser nach der Erfindung von einem Stromabnehmer mit weitgehend abgenutzter Schleifkohle überfahren, läuft der dementsprechend gegen die Schleifleitung verlagerte, an dem Stromabnehmer befindliche Anschlag gegen den korrespondierenden, über die Schleifleitung vorspringenden, auf der Bestandteil des Impulsauslösers bildenden Welle sitzenden Hebel auf, wodurch der Welle eine Drehbewegung vermittelt wird, durch die das noch auf der Welle sitzende Betätigungsglied in Wechselwirkung mit einem Schalter tritt und so einen Impuls auslöst, der entweder zu einem das Wartungspersonal informierenden Signal führt oder aber veranlaßt, daß eine in der Hängebahn hinter dem Impulsauslöser vorgesehene Weiche betätigt wird, durch die das Hängebahnfahrzeug mit abgenutzter Schleifkohle auf ein Reparaturgleis gelangt, in dem es dann zum Auswechseln der Kohle bereitsteht.

Dieser Impulsauslöser läßt sich ohne weiteres mehradrigen Schleifleitungen zuordnen, deren Adern in einem vergleichsweise geringen Abstand zueinander verlaufen. Darüber hinaus handelt es sich bei der erfindungsgemäßen Lösung um eine vergleichsweise einfache und dementsprechend kostengünstige Konstruktion. In vorteilhafter Weise kommt man hierbei dann auch mit einer einzigen Signalleitung für die Anzeige der Abnutzung der Schleifkohle eines von mehreren Stromabnehmern aus.

Ausgestaltungen des Impulsauslösers ergeben sich aus den Unteransprüchen und aus dem in der Zeichnungsbeschreibung erläuterten Ausführungsbeispiel.

In der Zeichnung ist die Erfindung anhand eines Ausführungsbeispieles weitergehend erläutert. Es zeigen:

Figur 1 eine Schleifleitung mit ihr zugeordnetem Impulsauslöser nach der Erfindung in Draufsicht,

Figur 2 die Ansicht der Schleifleitung in Richtung des Pfeiles II in Figur 1, teilweise aufgebrochen, mit der Schleifleitung zugeordnetem funktionstüchtigem Stromabnehmer,

Figur 3 eine der Figur 2 entsprechende Darstellung mit einem Stromabnehmer mit abgenutzter Schleifkohle.

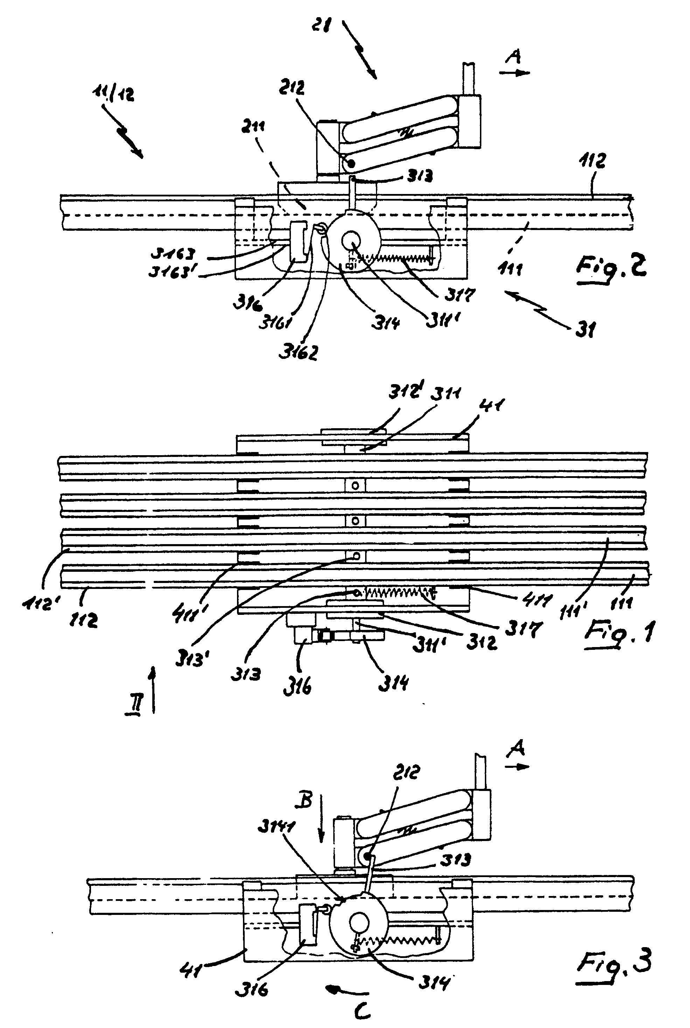

Bei der in Figur 1 dargestellten Schleifleitung 11/12 handelt es sich um eine 4-polige berührungsgeschützte Schleifleitung. Dabei sind die Stromschienen 111,111'... im Grund von Kunststoffkanälen 112,112'... angeordnet, die so ausgestaltet sind, daß die Stromschienen 111, 111'... lediglich für die Bestandteil der Stromabnehmer 21 (Figur 2 und 3) bildende Schleifkohle 211 zugänglich sind. Zusammengefaßt sind die 4 Adern der Schleifleitung 11/12 etwa durch nicht dargestellte Traversen, auf denen die Adern in definiertem Abstand voneinander durch Bestandteil der Traversen bildende, an den Kunststoffkanälen 112,112'... angreifende Halterungen festgelegt werden.

Nach der Erfindung wird unterhalb der Schleifleitung 11/12 eine sich quer zur Schleifleitung erstreckende Welle 311 gelagert (312,312'), auf der sich einerseits zwischen den Kunststoffkanälen 112,112'... der Schleifleitung 11/12 hindurch erstreckende Hebel 313, 313'... befinden und auf der andererseits an dem über die Lagerstelle 312 vorspringenden Wellenende 311' eine einen Schalter 316 betätigende Nockenscheibe 314 sitzt.

Die einerseits durch eine Rückstellfeder 317 und andererseits durch einen die von der Rückstellfeder 317 bewirkte Drehung begrenzenden Anschlag bzw. durch eine noch an der Welle angreifende, gegensinnig zur ersten Feder wirkende Feder vorgegebene Ausgangslage der vorbeschriebenen Welle 311 ist in den Figuren 1 und 2 angedeutet. Dabei erstrecken sich die auf der Welle 311 befindlichen Hebel 313,313'... zwischen den Bestandteil der Schleifleitung 11/12 bildenden Kunststoffkanälen 112,112'... hindurch und ragen stromabnehmerseitig (21) begrenzt aus der Schleifleitung 11/12 heraus. Hierbei ist der sich über eine Rolle 3162 auf der Bestandteil der Welle 311 bildenden Nockenscheibe 314 abstützende Schließkontakt 3161 des Schalters 316 geöffnet.

Solange die Schleifkohlen 211 der Stromabnehmer 21... noch hinreichend lang sind, wird der Impuls- bzw. Signalauslöser 31 von den in Richtung des Pfeiles A verfahrenden Stromabnehmern 21..., die mit einem über den jeweiligen Kunststoffkanal 112,112'... vorspringenden Ausatz 212 versehen sind, ohne Wirkeingriff überfahren. Ist der Verschleiß der Schleifkohle 211 eines oder mehrerer Stromabnehmer 21... fortgeschritten und hat sich der Stromabnehmer 21 dementsprechend abgesenkt (Pfeil B) kommt der Ausatz 212 an den jeweiligen Stromabnehmern 21... mit den jeweils über die Schleifleitung 11/12 vorspringenden, Bestandteil des Auslösers 31 bildenden, auf der Welle 311 sitzenden Hebel 313,313'... in Wirkeingriff (Figur 3), die Welle 311 wird dementsprechend im Sinne des Pfeiles C gedreht, damit dann auch die am Wellenende 311' sitzende Nockenscheibe 314, wobei die Bestandteil der Kontaktzunge 3161 bildende Rolle 3162 aus dem Rücksprung 3141 der Nockenscheibe 314 heraus auf dem vollen Umfang der Nockenscheibe 314 gelangt, womit die Kontaktzunge 3161 in Schließstellung überführt wird, wodurch dann ein Impuls oder ein Signal ausgelöst wird.

Der Impulsauslöser 31 ist in einem Gehäuse 41 zusammengefaßt, das über Halterungen 411,411'... mit der Schleifleitung 11/12 verbunden ist. In dem Gehäuse 41 ist dann auch der Schalter 316 installiert, von dem Leitungen 3163, 3163' ausgehen.

## Patentansprüche

1. Auf die fortgeschrittene Abnutzung der Schleifkohle von entlang einer mehradrigen Schleifleitung (11, 12) verfahrbaren Stromabnehmern (21) ansprechender Impulsauslöser (31), mit folgenden Merkmalen:

1. es ist eine die Schleifleitung (11, 12) an ihrer Rückseite über deren Breite querende Welle (311) vorgesehen,

2. von der Welle (311) gehen jeweils angrenzend an eine Ader (111/112, 111'/112'...) der Schleifleitung (11, 12) in der Ausgangslage der Welle (311) über die Rückseite der Schleifleitung (11, 12) vorspringende Hebel (313) aus,

3. an der Welle (311) greift eine der Welle (311) ihre Ausgangslage vermittelnde Rückstellfeder (317) an,

4. jeder der Stromabnehmer (21) ist mit einem seitlich aus ihm vorspringenden, bei abgenutzter Schleifkohle gegen den entsprechenden, von der Welle (311) ausgehenden Hebel (313) auflaufender, der Welle eine Drehbewegung vermittelnder Ansatz (212) versehen,

5. die Welle (311) ist mit einem Überstand (311') über die Schleifleitung (11, 12) versehen, auf der ein Betätigungsglied (314) angeordnet ist, das bei der Welle (311) vermittelter Drehung aus ihrer Ausgangslage heraus einen Schalter (316) betätigt.

2. Impulsauslöser nach Anspruch 1 dadurch gekennzeichnet, daß das Betätigungsglied eine an einem Ende der Welle (311) befindliche Kurvenscheibe (314) ist, auf der sich eine Bestandteil des Schalters (316) bildende, auffedernde Kontaktzunge (3161) abstützt.

3. Impulsauslöser nach Anspruch 2, dadurch gekennzeichnet, daß die Kontaktzunge (3161) sich über eine am freien Ende der Kontaktzunge (3161) angeordnete Rolle (3162) auf der Kurvenscheibe (314) abstützt.

4. Impulsauslöser nach einem der Ansprüche 1 bis 3, dadurch gekennzeichnet, daß die Welle (311) in einem an der Schleifleitung (11/12) angeordneten Gehäuse (41) gelagert ist, in dem dann auch der Schalter (316) installiert ist.

## Claims

1. Pulse releasing means (31), which responds to the advanced wear of the carbon brush of current collectors (21), which are displaceable along a multi-cored contact line (11, 12), having the following features:

1. a shaft (311) is provided, which traverses the width of the contact line (11, 12) at its rear end;

2. levers (313), which protrude beyond the rear end of the contact line (11, 12), extend from the shaft (311), each in abutment with a respective core (111/112, 111'/112'...) of the contact line (11, 12) in the initial position of the shaft (311);

3. a return spring (317), which provides the shaft (311) with its initial position, co-operates with the shaft (311);

4. each of the current collectors (21) is provided with an extension member (212), which protrudes laterally from said collector, extends towards the corresponding lever (313), proceeding from the shaft (311), when the carbon brush has becomeworn, and provides the shaft with a rotational movement; and

5. the shaft (311) is provided with a projection portion (311'), which protrudes beyond the contact line (11, 12), and an actuating member (314) is disposed on said contact line and actuates a switch (316) in the event of the shaft (311) being caused to rotate from its initial position.

2. Pulse releasing means according to claim 1, characterised in that the actuating member is a cam plate (314), which is situated at one end of the shaft (311), and a springing-up contact tongue (3161), which forms a component part of the switch (316), is supported on said cam plate.

3. Pulse releasing means according to claim 2, characterised in that the contact tongue (3161) is supported on the cam plate (314) through the intermediary of a roller (3162), which is disposed at the free end of the contact tongue (3161).

4. Pulse releasing means according to one of claims 1 to 3, characterised in that the shaft (311) is mounted in a housing (41), which is disposed on the contact line (11, 12) and in which the switch (316) is then also installed.

**Revendications**

1. Déclencheur d'impulsion (31) réagissant à la progression de l'usure des charbons de balai de capteurs de courant (21) déplaçables le long d'une ligne de contact à conducteurs multiples (11,12), présentant les caractéristiques suivantes :

    1. il est prévu un arbre (331) passant transversalement la largeur de la ligne de contact (11,12), sur sa face arrière,

2. en partant de l'arbre (311), des leviers (313) faisant saillie sur la face arrière de la ligne de contact (11,12) partent chaque fois, adjacent à un conducteur (111/112, 111'/112'...) de la ligne de contact, l'arbre (311) étant en position initiale,

3. un ressort de rappel (317) agit sur l'arbre (311), en déterminant la position initiale de ce dernier,

4. chacun des capteurs de courant (21) est pourvu d'un appendice (212), faisant saillie latéralement du capteur, produisant un mouvement de rotation, lorsque le charbon de balai est usé, en passant contre le levier (313) partant de l'arbre (311),

5. l'arbre (311) est pourvu d'un prolongement (311') au-dessus de la ligne de contact (11,12), sur lequel est disposé un organe d'actionnement (314) qui actionne un interrupteur (316) lors de la rotation de l'arbre (311) lui faisant quitter sa position initiale.

2. Déclencheur d'impulsion selon la revendication 1, caractérisé en ce que l'organe d'actionnement est un disque de came (314) se trouvant à une extrémité de l'arbre (311), sur lequel prend appui une languette de contact élastique (3161) faisant partie de l'interrupteur (316).

3. Déclencheur d'impulsion selon la revendication 2, caractérisé en ce que la languette de contact (3161) prend appui sur le disque de came (314) par l'intermédiaire d'un galet (3162) disposé à l'extrémité libre de la languette de contact (3161).

4. Déclencheur d'impulsion selon l'une des revendications 1 à 3, caractérisé en ce que l'arbre (311) est monté dans un carter (41), disposé sur la ligne de contact (11,12), dans lequel est également installé l'interrupteur (316).

Fig. 2

Fig. 1

Fig. 3